# EUROPÄISCHE PATENTSCHRIFT

(11) **EP 0 370 258 B1**
(45) Veröffentlichungstag und Bekanntmachung des Hinweises auf die Patenterteilung: **19.05.1993**
(21) Anmeldenummer: 89119810.3
(22) Anmeldetag: 25.10.1989
(51) Int. Cl.: B21D 43/09

(54) **Einrichtung zum oszillierenden Antreiben mindestens einer Welle und eine Vorrichtung zum schrittweisen Vorschieben eines Werkstückes mit der Einrichtung**
Device for oscillatingly driving at least one shaft, and device for intermittently advancing a work piece with the device
Installation pour entraîner en oscillation au moins un arbre et dispositif pour avancer pas à pas une pièce à l'aide de cette installation

(30) Priorität: 26.10.1988 CH 3980/88
(43) Veröffentlichungstag der Anmeldung: 30.05.1990
(73) Patentinhaber: BRUDERER AG, CH-9320 Frasnacht (CH)
(72) Erfinder: Messner, Helmut, CH-9320 Arbon (CH)
(74) Vertreter: Blum, Rudolf Emil Ernst

(56) Entgegenhaltungen:
- DE-A- 3 247 001
- DE-B- 1 261 821
- FR-A- 2 155 460
- FR-A- 2 156 670
- FR-A- 2 250 585
- US-A- 1 877 819
- US-A- 2 232 091
- US-A- 4 561 582

## Beschreibung

Die vorliegende Erfindung betrifft eine Einrichtung zum oszillierenden Antreiben mindestens einer Welle, mit einem um eine Schwenkachse schwenkbaren Hebel, welcher mit einem sich translatorisch zwischen zwei Endstellungen hin- und herbewegendem Antriebsorgan verbunden ist, an welchem Hebel ein Gleitstein geführt ist, der über einen Zapfen mit einer mit der Welle verbundenen Kurbel verbunden ist.

In der US-A-1 877 819, die als nächstliegender Stand der Technik angesehen wird, ist eine Vorrichtung zum oszillierenden Antreiben von Wellen offenbart.

Die offenbarte Vorrichtung enthält einen um eine Schwenkachse schwenkbaren Hebel, welcher mit einem rotierenden Antriebsorgan verbunden ist und drehbar befestigte Gleitkörper aufweist, die in einer, an einer mit der anzutreibenden Welle verbundenen Schwinge vorgesehenen Gleitbahn geführt sind.

Der Hebel dieser Vorrichtung ist unter anderem ziemlich stark auf Torsion beansprucht. Zudem ist der Hebel verhältnismässig breit gebaut und weist Verstärkungsrippen auf, so dass beträchtliche Dehnlängen und auch im Betrieb auftretende Trägheitskräfte vorhanden sind.

Hier will die Erfindung Abhilfe schaffen. Die Erfindung, wie sie in dem Anspruch definiert ist, löst die Aufgabe, eine Einrichtung zum oszillierenden Antreiben mindestens einer Welle zu schaffen, bei der der schwenkbare Hebel innenliegende Gleitflächen enthält, an denen ein Gleitstein geführt ist, der vom Zapfen der Kurbei durchgesetzt ist und einen seitlich angeordneten, geschlossenen Schlitz aufweist, durch welchen Schlitz ein den Gleitstein tragenden Zapfen ragt, der Teil einer mit der mindestens einen Welle verbundenen Kurbel ist.

Die durch die Erfindung erreichten Vorteile sind im wesentlichen darin zu sehen, dass der Hebel nicht mehr auf Torsion beansprucht wird und die Abmessungen des Einrichtungsgehäuses vermindert sind, so dass einerseits im Betrieb kleinere Reibungskräfte durch ein Verkanten und weiter kleinere Dehnlängen vorhanden sind, so dass eine erhöhte Präzision beim Fertigen von Präge- und Stanzprodukten erreicht ist.

Im folgenden wird die Erfindung anhand von mehrere Ausführungswege darstellenden Zeichnungen näher erläutert.

Es zeigen:
Figur 1 eine Ausführung der Erfindung, in einer beispielsweisen Anwendung in einer Vorrichtung zum oszillierenden Antreiben mindestens einer Welle, und
Figuren 2 und 3, in vergrössertem Massstab, die erfindungsgemässe Einrichtung zum oszillierenden Antreiben mindestens einer Welle.

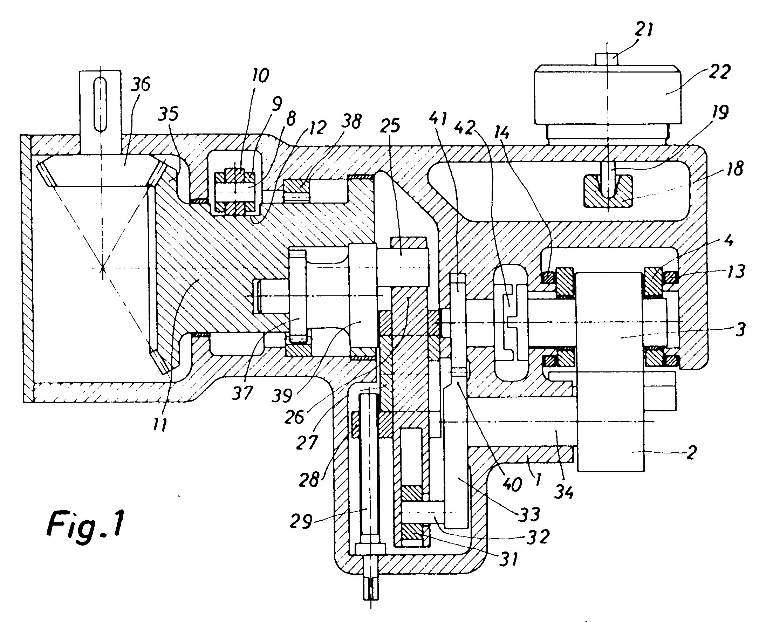

Die in der Figur 1 dargestellte Vorrichtung zum schrittweisen Vorschieben von bandförmigen Werkstükken, beispielsweise Blechbänder, und in welcher die Einrichtung zum oszillierenden Antreiben einer Welle angeordnet ist, weist ein Gehäuse 1 auf. In diesem Gehäuse 1 ist ein oszillierendes Vorschubglied 2 gelagert, welches in dem in der Figur 1 gezeigten Ausführungsbeispiel eine untere Vorschubwalze ist. Weiter ist eine verstellbar gelagerte und benachbart zum oszillierenden Vorschubglied 2, d.h. der unteren Vorschubwalze angeordnete Presswalze 3 vorhanden. Diese Presswalze 3 ist in dem Ausführungsbeispiel nach der Figur 1 als angetriebene obere Vorschubwalze ausgebildet. Diese beiden Vorschubwalzen 2 und 3 dieser Ausführung werden auf noch zu beschreibende Weise oszillierend und gegenläufig angetrieben. Die obere Vorschubwalze 3 ist an ihren beiden Enden in einer Wippe 4 derart drehbar gelagert, dass sie gegen die Presswalze 3 und von dieser weg bewegbar ist, beispielsweise wie in der US-A-3 758 011 und in der US-A-3 784 075 offenbart ist. Der Antrieb der Wippe 4 erfolgt über eine Rolle 10. Diese Rolle 10 wirkt mit einem auf einer Antriebswelle 11 ausgebildeten Nockenglied 12 zusammen. Der Antrieb der Antriebswelle 11 ist über die erfindungsgemässe Einrichtung mit dem Antrieb der Vorschubwalzen 2 und 3 gekoppelt, wie später genauer beschrieben sein wird.

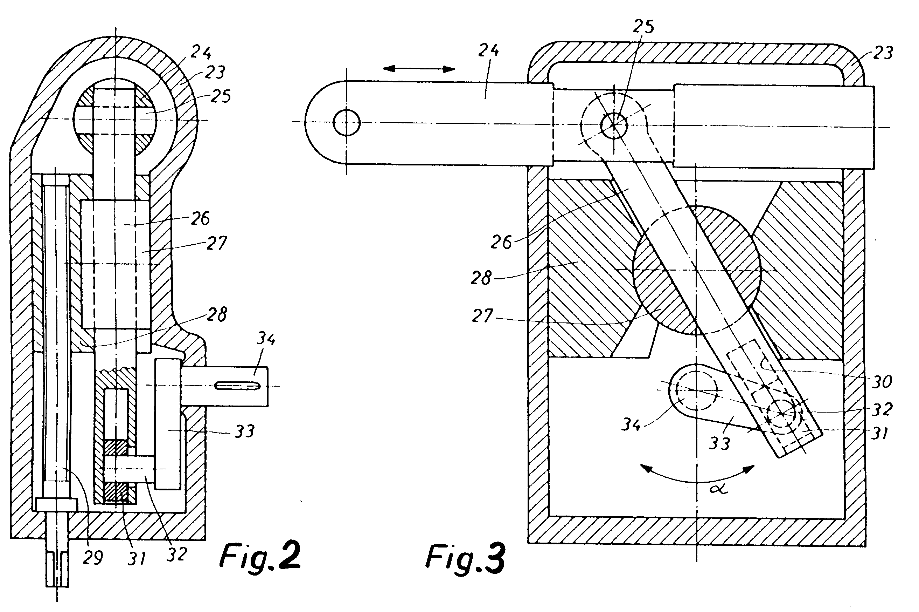

Anhand der Figuren 2 und 3 wird nun schematisch die Wirkungsweise der Einrichtung zum oszillierenden Antreiben mindestens einer Welle beschrieben.

Eine in einem Gehäuse 23 längsverschiebbar gelagerte Stange 24 wird auf geeignete Weise, z.B. mittels eines Kurbeltriebes, hin- und herbewegt und treibt einen über einen Zapfen 25 schwenkbar mit ihr verbundenen Hebel 26 an. Dieser Hebel 26 ist in einem trommelförmigen Führungsorgan 27 geführt, welches in einem Lagerbock 28 mit einem Innengewinde gelagert ist. Der Lagerbock 28 ist im Gehäuse 23 gegen Verdrehung gesichert und von einer Schraubspindel 29 durchsetzt. Beim Drehen der Spindel 29 verschiebt sich der Lagerbock 28 zusammen mit dem Führungsorgan 27, wodurch der Drehpunkt des Hebels 26 verstellt werden kann.

Der Hebel 26 ist als Hohlprofil mit innenliegenden Gleitflächen 30 ausgebildet, in welchem ein Gleitstein 31 gelagert ist. Dieser Gleitstein 31 ist vom Zapfen 32 einer Kurbel 33 durchsetzt. Diese Kurbel 33 ist mit der oszillierend anzutreibenden Welle 34 verbunden. Im Hohlprofil ist ein seitlich angeordneter, geschlossener Schlitz vorhanden, der vom Zapfen 32 der Kurbel 33 durchsetzt ist.

Wird nun die Stange 24 translatorisch hinund herbewegt, so wird der Hebel 26 mit der Achse des trommelförmigen Führungsorgans 27 als Drehachse hin- und her gedreht. Die Schwenkbewegung des Endes des Hebels 26 wird über den Gleitstein 31 und dem darin gelagerten Zapfen 32 über die Kurbel 33 auf die anzutreibende Welle 34 übertragen, wodurch diese Welle 34 oszillierend angetrieben wird.

Durch Drehen der Schraubspindel 29 kann die Drehachse des Hebels 26 verstellt werden, wodurch die Grösse des Ausschlages des den Gleitstein 31 tragenden Endes des Hebels 26 und damit die Amplitude der Oszillationsbewegung der Welle 34 verändert werden kann.

Dabei ist wesentlich, dass die Translationsbewegung der längsverschiebbar gelagerten Stange 24 und die Bewegung des Zapfens 25 unabhängig vom genannten Ausschlag des Hebels 26 immer gleich ist und der Zapfen 25 immer dieselben Endlagen, in denen seine Bewegungsrichtung umgekehrt wird, einnimmt.

Das trommelförmige Führungsorgan 26 ist derart drehbar im Lagerbock 28 eingesetzt, dass der geometrische Mittelpunkt des trommelförmigen Führungsorgans 27 auf der Mittelachse des Hebels 26 liegt. Durch diese Anordnung und dadurch, dass der Gleitstein 31 im Hebel 26 translatorisch verschiebbar gelagertist, ist nun der Hebel 26 keinen Torsionsbeanspruchungen ausgesetzt, so dass eine kleinere innere Federung der Vorrichtung erzielt ist. Weiter lässt sich nun das Gehäuse 23 verhältnismässig schmal bauen, so dass eine Platzeinsparung erzielt ist.

Anhand der Figur 1 wird nun beschrieben, wie das oben dargestellte Antriebsprinzip auf die erfindungsgemässe Einrichtung, hier nun zum Antrieb der beiden Vorschubwalzen 2 und 3 angewandt ist. Die Antriebswelle 11 trägt an ihrem einen Ende ein Zahnrad 35, das mit einem von einem nicht dargestellten Hauptantrieb angetriebenen Antriebszahnrad 36 kämmt. In der Antriebswelle 11 ist ein Zahnrad 37 exzentrisch gelagert. Dieses Zahnrad 37 wälzt sich auf einen im Gehäuse 1 eingelassenen Zahnkranz 38 mit Innenverzahnung ab. Das Zahnrad 37 ist mit einer Scheibe 39 fest verbunden, welche einen exzentrisch angeordneten Zapfen 25 trägt. Dieser Zapfen 25 ist mit dem Hebel 26 verbunden, in welchem der Gleitstein 31 angeordnet ist, welcher vom Zapfen 32 der Kurbel 33 durchsetzt ist, über welche die anzutreibende Welle 34 oszillierend angetrieben wird. Mittels der Schraubspindel 29 wird der Lagerbock 28, in dem das trommelförmige Führungsorgan 27 gelagert ist, je nach der zu wählenden Amplitude auf-bzw. abwärts geschraubt. Die Kurbel 33 weist ein Zahnsegment 40 auf, welches mit einem Zahnsegment einer Scheibe oder Schwinge 41 kämmt. Ueber eine geeignete Kupplung 42 wird die oszillierende Bewegung der Scheibe bzw. Schwinge 41 auf die obere Vorschubwalze 3 übertragen.

Damit werden die beiden Vorschubwalzen 2 und 3 gegenläufig oszillierend angetrieben.

## Patentansprüche

1. Einrichtung zum oszillierenden Antreiben mindestens einer Welle (34), mit einem um eine Schwenkachse schwenkbaren Hebel (26), welche mit einem sich translatorisch zwischen zwei Endstellungen hin- und herbewegenden Antriebsorgan (25) verbunden ist, an welchem Hebel (26) ein Gleitstein (31) geführt ist, der über einen Zapfen (32) mit einer mit der Welle (34) verbundenen Kurbel (33) verbunden ist, dadurch gekennzeichnet, dass der Hebel (26) als Hohlprofil mit innenliegenden Gleitflächen (30) und mit einem seitlich angeordneten, geschlossenen Schlitz ausgebildet ist, in welchem Hohlprofil der Gleitstein (31) geführt ist, welcher Gleitstein (31) vom durch den geschlossenen Schlitz ragenden Zapfen (32) der Kurbel (33) durchsetzt ist.

## Claims

1. Apparatus for an oscillating driving of at least one shaft (34), with a lever (26) which is pivotable around a pivot axis, which is coupled to a driving member (25) which is translatoric reciprocatable between two end positions, at which lever (26) a slide ring (31) is guided which is connected via a pivot (32) to a crank (33) mounted to the shaft (34), characterized in that the lever (26) is designed as hollow profile with inner gliding surfaces (30) and a closed slit located laterally, in which hollow profile the slide ring (31) is guided, and that the pivot (32) of the crank (33) projects through the closed slit and the slide ring (31).

## Revendications

1. Dispositif pour imprimer un mouvement oscillant à un arbre (34) au moins, comprenant un levier (26) qui peut pivoter autour d'un axe de pivotement et qui est raccordé à un organe d'entraînement (25) animé d'un mouvement de translation en va-et-vient entre deux positions extrêmes, levier (26) sur lequel est guidée une pièce coulissante (31) qui est articulée au moyen d'un tourillon (32) sur une manivelle (33) fixée à l'arbre (34), caractérisé en ce que le levier (26) est réalisé sous la forme d'un profilé creux comportant des surfaces de glissement intérieures (30) et une fente disposée latéralement, profilé creux dans lequel est guidée la pièce de glissement (31), laquelle pièce de glissement (31) est traversée par le tourillon (32) de la manivelle (33) qui fait saillie à travers la fente.
